# EUROPÄISCHE PATENTSCHRIFT

(11) **EP 2 209 564 B1**
(45) Veröffentlichungstag und Bekanntmachung des Hinweises auf die Patenterteilung: **14.09.2011**
(21) Anmeldenummer: 08851014.4
(22) Anmeldetag: 06.11.2008
(51) Int. Cl.: B05D 7/00, C09D 167/00, C09D 175/04

(54) **VERFAHREN ZUR HERSTELLUNG HOCHSCHLAGFESTER SCHICHTEN**
METHOD FOR THE PRODUCTION OF HIGH-IMPACT LAYERS
PROCÉDÉ DE PRODUCTION DE COUCHES HAUTEMENT RÉSISTANTES AUX CHOCS

(30) Priorität: 14.11.2007 DE 102007054247
(43) Veröffentlichungstag der Anmeldung: 28.07.2010
(73) Patentinhaber: BASF Coatings GmbH, 48165 Münster (DE); Université Blaise Pascal, 63000 Clermont-Ferrand (FR)
(72) Erfinder: HINTZE-BRÜNING, Horst, 48165 Münster (DE); STEINER, Hans-Peter, 48324 Sendenhorst (DE); LEROUX, Fabrice, F-63670 Le Cendre (FR); TROUTIER-THUILLIEZ, Anne-Lise, F-63100 Clermont-Ferrand (FR)
(74) Vertreter: Fischer, Jens-Dieter W.E.
(86) Internationale Anmeldenummer: PCT/EP2008/009324
(87) Internationale Veröffentlichungsnummer: WO 2009/062620

(56) Entgegenhaltungen:
- JP-A- 2004 091 647
- US-A1- 2002 028 288
- US-A1- 2005 085 569
- US-A1- 2006 046 068
- DATABASE WPI Week 200279 Thomson Scientific, London, GB; AN 2002-725984 XP002511648 -& JP 2002 180000 A (NIPPON PAINT CO LTD) 26. Juni 2002 (2002-06-26)
- DATABASE WPI Week 200576 Thomson Scientific, London, GB; AN 2005-737570 XP002511649 -& JP 2005 270861 A (HONDA MOTOR CO LTD) 6. Oktober 2005 (2005-10-06)

## Beschreibung

Die Bereitstellung von steinschlagfesten Beschichtungen auf metallischen Substraten ist im Bereich der Kraftfahrzeugherstellung von besonderer Bedeutung. An einen Füller oder einen Steinschlagschutzgrund werden eine Reihe von Anforderungen gestellt. So soll die Füllerschicht nach der Härtung eine hohe Steinschlagbeständigkeit, insbesondere gegen Multischlag, und gleichzeitig eine gute Haftung zur Grundierung, insbesondere zur KTL und zum Basislack, gute Fülleigenschaften (Abdeckung der Struktur des Substrats) bei Schichtdicken von etwa 20 bis 35 µm sowie eine gute Appearance bei der abschließenden Klarlackschicht bewirken. Weiterhin sollen geeignete Beschichtungsstoffe, insbesondere aus ökologischen Gründen, vorzugsweise arm an oder weitestgehend frei von organischen Lösemitteln sein. Beschichtungsmittel für Füller sind bekannt und beispielsweise in EP-A-0 788 523 und EP-A-1 192 200 beschrieben. Dort werden wasserverdünnbare Polyurethane als Bindemittel für Füller beschrieben, die die Steinschlagfestigkeit insbesondere bei vergleichsweise geringen Schichtdicken gewährleisten sollen. Bei der Belastung in Steinschlagtests treten bei den Füllern des Standes der Technik in OEM-Schichtaufbauten (KTL-Füller-Basislack-Klarlack) trotz guter Steinschlagfestigkeit, das heißt einer vergleichsweise geringen Anzahl von Beschädigungen, allerdings häufig Schadensbilder an der Lackschicht auf, bei denen das ungeschützte Metallsubstrat durch unkontrollierte Rißfortpflanzung im OEM-Schichtaufbau und anschließender Delamination an der Grenzfläche zwischen Metall und KTL freigelegt wird.

Aus der WO-A-01/04050 sind anorganische anionische oder kationische Schicht-Füllstoffe für wäßrige Beschichtungsmittel mit guten Barriereeigenschaften bekannt, welche mit organischen Verbindungen zur Aufweitung des Abstands der Schichten im Füllstoff modifiziert sind, die mindestens zwei ionische Gruppen aufweisen, welche durch mindestens 4 Atome getrennt sind. Als kationische Füllstoffe können gemischte Hydroxide, wie insbesondere Hydrotalcit-Typen, zum Einsatz kommen. Die in WO-A-01/04050 beschriebenen Beschichtungsmittel werden für Beschichtungen mit sehr guten Barriereeigenschaften gegenüber Gasen und Flüssigkeiten eingesetzt, wobei die Füllstoffe den Härtprozeß nicht beeinflussen sollen. Eine Verwendung der Beschichtungsmittel zur Verbesserung der Schadensbilder nach Schlagbelastung in OEM-Schichtaufbauten, insbesondere zur Reduktion der freigelegten Substratoberfläche, ist nicht bekannt. Die in WO-A-01/04050 beschriebenen Beschichtungsmittel sind für den Einsatz in OEM-Schichtaufbauten nur bedingt geeignet, da die organischen Modifizierungsmittel in der applizierten Schicht aufgrund der mehrfachen Ladung eine hohe lokale Dichte an Ladungen erzeugen, welche makroskopisch zu einer erhöhten Hygroskopie der ausgehärteten Schicht führt, was insbesondere negative Folgen für die Schwitzwasserbeständigkeit der Schicht hat.

In EP-A-0 282 619 werden Korrosionsschutzlacke auf Lösemittelbasis enthaltend pulverförmige gemischte Hydroxide beschrieben, wobei als Anionen Salicylat-Anionen eingesetzt werden können. Eine Verwendung der Beschichtungsmittel zur Verbesserung der Schadensbilder nach Schlagbelastung in OEM-Schichtaufbauten, insbesondere zur Reduktion der freigelegten Substratoberfläche, ist nicht bekannt.

M.L.Nobel et al. (Progress in Organic Coatings, 58, (2007), 96-104) beschreiben Beschichtungsmittel, welche auch für OEM-Aufbauten eingesetzt werden können, enthaltend Bindemittel, Vernetzer und anionische Füllstoffe, welche mit kationischen organischen Verbindungen zur Aufweitung des Abstands der Schichten im Füllstoff modifiziert sind. Solche kationischen organische Verbindungen sind in wäßriger Phase deutlich instabiler als entsprechende anionische Verbindungen und neigen insbesondere im Falle der Ammoniumverbindungen beim Aushärten des Beschichtungsmittel zur Verfärbung, welche zu unerwünschten Farbtonverschiebungen in der Beschichtung führen kann. Abgehoben wird auf eine Anreicherung der modifizierten anorganischen Füllstoffe an den Phasengrenzen zwischen Tröpfchen aus dispergiertem Polymerisat und Wasser oder in den Tröpfchen, was zu einer verbesserten Rheologie sowie einer erhöhten Steifigkeit der mit dem Beschichtungsmittel hergestellten Schichten führen soll. In der Regel führt eine Erhöhung der Steifigkeit in dünneren Schichten zur erhöhten Neigung zum Sprödbruch und damit zu einer erhöhten Freilegung von Substratoberfläche, mithin einem verschlechterten Schadensbild. Eine Verwendung der von M.L.Nobel et al. beschriebenen Beschichtungsmittel zur Verbesserung der Schadensbilder nach Schlagbelastung in OEM-Schichtaufbauten, insbesondere zur Reduktion der freigelegten Substratoberfläche, ist nicht beschrieben.

### Aufgabe und Lösung

Im Lichte des Standes der Technik resultiert als Aufgabe für die vorliegende Erfindung die Bereitstellung von steinschlagfesten Beschichtungen, insbesondere basierend auf ökologisch vorteilhaften wäßrigen Beschichtungsmaterialen, mit einem deutlichen verbesserten Schadensbild, insbesondere mit einer deutlichen Reduktion der Delamination des OEM-Schichtverbunds an der Grenzfläche zwischen Metall und KTL und damit mit einer deutlichen Reduktion der freigelegten Substratoberfläche nach Schlagbelastung.

In bevorzugten Ausführungsformen der Erfindung sollen die steinschlagfesten Beschichtungen eine geringe Neigung zur Wasseraufnahme und eine geringe Neigung zur Verfärbung beim Aushärten der Schicht zeigen.

Überraschenderweise wurde ein Verfahren zur Erhöhung der Steinschlagfestigkeit von OEM-Schichtaufbauten, bestehend aus einer Korrosionsschicht, einer Füllerschicht und einer abschließenden Decklackschich gefunden, dadurch gekennzeichnet, dass in das zur Herstellung mindestens einer der genannten Schichten verwendete wässrige Beschichtungsmittel, enthaltend mindestens ein filmbildendes wasserdispergierbares Polymerisat (WP), 0,1 bis 30 Gew.-%, bezogen auf die nichtflüchtigen Anteile des Beschichtungsmittels, positiv geladener anorganischer Teilchen (AT), deren Verhältnis D/d des mittleren Teilchendurchmessers (D) zur mittleren Teilchendicke (d) > 50 beträgt und deren Ladung zumindestens teilweise mit einfach geladenen organischen Gegenionen (OG) kompensiert wird, eingetragen wird, wobei die positiv geladenen anorganischen Teilchen (AT) beim Eintragen in das Beschichtungsmittel in einer wässrigen Suspension vorliegen, das Beschichtungsmittel aufgetragen und abschließend ausgehärtet wird.

### Beschreibung der Erfindung

Als erfindungswesentliche Komponenten enthält das für das erfindungsgemäße Verfahren verwendete Beschichtungsmittel mindestens ein filmbildendes Wasserdispergierbares Polymerisat (WP), wobei bei der Herstellung des Beschichtungsmittels 0,1 bis 30 Gew.-%, bezogen auf die nichtflüchtigen Anteile des Beschichtungsmittels, positiv geladene anorganische Teilchen (AT), deren Verhältnis D/d des mittleren Teilchendurchmessers (D), im Falle nicht kreisförmiger Plättchen entspricht der Teilchendurchmesser der längsten Flächendiagonale des Teilchens, zur mittleren Teilchendicke (d) > 50 beträgt und deren Ladung zumindestens teilweise mit einfach geladenen organischen Gegenionen (OG) kompensiert wird, eingearbeitet werden.

Das filmbildende Wasserdispergierbares Polymerisat (WP) bildet bei den Aushärtbedingungen auf dem zu beschichtenden Substrat einen zusammenhängenden Film. Vorzugsweise enthält das filmbildende wasserdispergierbare Polymerisat (WP), bevorzugt ausgewählt aus der Gruppe der wasserdispergierbaren Polyurethane, Polyester, Polyamide, Polyepoxide, Polyether und Polyacrylate, wobei Polyurethane und Polyester ganz besonders bevorzugt sind.

Im Sinne der Erfindung wasserdispergierbar oder wasserlöslich bedeutet, daß die Polymerisate (WP) in der wäßrigen Phase Aggregate mit einem mittleren Teilchendurchmesser von < 500, bevorzugt < 200 und besonders bevorzugt < 100 nm ausbilden, beziehungsweise molekulardispers gelöst sind. Die Größe der Aggregate bestehend aus Polymerisat (WP) kann in an sich bekannter Weise durch Einführung von hydrophilen Gruppen am Polymerisat (WP) bewerkstelligt werden.

Die wasserdispergierbaren Polymerisate (WP) weisen vorzugsweise massenmittlere Molekulargewichte Mw (bestimmbar durch Gelpermeations-Chromatographie mit Polystyrol als Standard) von 1.000 bis 100.000 Dalton, besonders bevorzugt von 1.500 bis 50.000 Dalton auf.

Vorzugsweise tragen die Polymerisate (WP) vernetzbare funktionelle Gruppen (a), wobei prinzipiell alle Gruppen geeignet sind, die mit sich selbst und/oder mit weiteren funktionellen Gruppen des Polymerisats (WP) und/oder mit weiteren Bestandteilen des für das erfindungsgemäße Verfahren verwendeten Beschichtungsmittels unter Ausbildung kovalenter Bindungen reagieren können.

Die Vernetzung der funktionellen Gruppen (a) kann durch Strahlung und/oder thermisch induziert werden.

Durch Strahlung vernetzbare Gruppen (a) sind in der Regel Gruppen, die durch Bestrahlen mit aktinischer Strahlung reaktiv werden und mit anderen aktivierten Gruppen ihrer Art Reaktionen unter Ausbildung kovalenter Bindungen eingehen können, die nach einem radikalischen und/oder ionischen Mechanismus ablaufen. Beispiele geeigneter Gruppen (a) sind C-H-Einzelbindungen, C-C-, C-O-, C-N-, C-P- oder C-Si-Einzel- oder Doppelbindungen, wobei C-C-Doppelbindungen bevorzugt sind.

In der bevorzugten Ausführungsform der Erfindung ist die Vernetzung der funktionellen Gruppen (a) thermisch induziert, wobei die Gruppen (a) mit sich selbst, das heißt mit weiteren Gruppen (a), und/oder bevorzugt mit komplementären Gruppen reagieren. Die Auswahl der funktionellen Gruppen (a) sowie der komplementären Gruppen richtet sich zum einen danach, daß sie bei der Herstellung der Polymerisate (P) sowie bei der Herstellung, der Lagerung und der Applikation der Beschichtungsmittel keine unerwünschten Reaktionen, insbesondere keine vorzeitige Vernetzung, eingehen und zum anderen danach, in welchem Temperaturbereich die Vernetzung stattfinden soll.

Beispielhaft für mit sich selbst reagierende Gruppen (a) seien genannt: Methylol-, Methylolether-, N-Alkoxymethylamino- und insbesondere Alkoxysilylgruppen.

Beispielhaft für die erfindungsgemäß bevorzugten Paare aus Gruppen (a) und komplementären Gruppen seien genannt: Hydroxylgruppen (a) mit Säure-, Säureanhydrid, Carbamat-, gegebenenfalls veretherten Methylolgruppen als funktionelle Gruppe (b) und/oder gegebenenfalls blockierten Isocyanatgruppen, Aminogruppen (a) mit Säure-, Säureanhydrid, Epoxy- und/oder Isocyanatgruppen als funktionelle Gruppe (b), Epoxygruppen (a) mit Säure- und/oder Aminogruppen als funktionelle Gruppe (b) sowie Mercaptogruppen (a) mit Säure-, Säureanhydrid, Carbamat- und/oder Isocyanatgruppen als funktionelle Gruppe (b). In einer besonders bevorzugten Ausführungsform der Erfindung sind die komplementären funktionellen Gruppen (b) Bestandteil eines Vernetzungsmittels (V), das nachstehend beschrieben wird

Insbesondere Hydroxyl-, Amino- und/oder Epoxygruppen sind als Gruppen (a) bevorzugt. Besonders bevorzugt sind Hydroxylgruppen, wobei die OH-Zahlen des Polymerisats P nach DIN EN ISO 4629 vorzugsweise zwischen 10 und 200, besonders bevorzugt zwischen 20 und 150 betragen.

Die funktionellen Gruppen (a) werden über den Einbau geeigneter Molekülbausteine in dem Fachmann bekannter Weise in das Polymerisat (P) eingeführt.

Die besonders bevorzugten wasserdispergierbaren Polyurethane (WP) können aus Bausteinen, wie sie beispielsweise in der DE-A-40 05 961 oder EP-A-1 192 200 beschrieben werden, hergestellt werden. In die Polyurethanmoleküle sind vorzugsweise zur Anionenbildung befähigte Gruppen eingebaut, welche nach ihre Neutralisation dafür sorgen, daß das Polyurethanharz in Wasser stabil dispergiert werden kann. Geeignete zur Anionenbildung befähigte Gruppen sind vorzugsweise Carbonsäure-, Sulfonsäure- und Phosphonsäuregruppen, besonders bevorzugt Carbonsäuregruppen. Die Säurezahl der Polyurethanharze nach DIN EN ISO 3682 liegt vorzugsweise zwischen 10 und 80 mg KOH/g, besonders bevorzugt zwischen 20 und 60 mg KOH/g. Zur Neutralisation der zur Anionenbildung befähigten Gruppen werden bevorzugt Ammoniak, Amine und/oder Aminoalkohole eingesetzt, wie beispielsweise Diund Triethylamin, Dimethylaminoethanolamin, Diisopropanolamin, Morpholine und/oder N-Alkylmorpholine. Als funktionelle Gruppe (a) werden bevorzugt Hydroxylgruppen eingesetzt, wobei die OH-Zahlen der Polyurethanharze nach DIN EN ISO 4629 vorzugsweise zwischen 10 und 200, besonders bevorzugt zwischen 20 und 150 betragen.

Die ebenfalls besonders bevorzugten wasserdispergierbaren Polyester (WP) können aus Bausteinen, wie sie ebenfalls beispielsweise in der DE-A-40 05 961 beschrieben werden, hergestellt werden. In die Polyestermoleküle sind vorzugsweise zur Anionenbildung befähigte Gruppen eingebaut, welche nach ihre Neutralisation dafür sorgen, daß das Polyesterharz in Wasser stabil dispergiert werden kann. Geeignete zur Anionenbildung befähigte Gruppen sind vorzugsweise Carbonsäure-, Sulfonsäure- und Phosphonsäuregruppen, besonders bevorzugt Carbonsäuregruppen. Die Säurezahl der Polyesterharze nach DIN EN ISO 3682 liegt vorzugsweise zwischen 10 und 80 mg KOH/g, besonders bevorzugt zwischen 20 und 60 mg KOH/g. Zur Neutralisation der zur Anionenbildung befähigten Gruppen werden bevorzugt ebenfalls Ammoniak, Amine und/oder Aminoalkohole eingesetzt, wie beispielsweise Di- und Triethylamin, Dimethylaminoethanolamin, Diisopropanolamin, Morpholine und/oder N-Alkylmorpholine. Als funktionelle Gruppe (a) werden bevorzugt Hydroxylgruppen eingesetzt, wobei die OH-Zahlen der Polyesterharze nach DIN EN ISO 4629 vorzugsweise zwischen 10 und 200, besonders bevorzugt zwischen 20 und 150 liegen.

Das Bindemittel ist in dem für das erfindungsgemäße Verfahren verwendeten Beschichtungsmittel vorzugsweise in Anteilen von 10 bis 95 Gew.-%, besonders bevorzugt von 20 bis 80 Gew.-%, bezogen auf die nicht-flüchtigen Anteile des Beschichtungsmittels, vorhanden.

Das in der bevorzugten Ausführungsform der Erfindung eingesetzte Vernetzungsmittel (V) weist mindestens zwei funktionelle Gruppen (b) auf, welche als komplementäre Gruppen mit den funktionellen Gruppen (a) des Polymerisats (P) beim Aushärten des Beschichtungsmittels unter Ausbildung kovalenter Bindungen reagieren. Die funktionellen Gruppen (b) können durch Strahlung und/oder thermisch zur Reaktion gebracht werden. Bevorzugt sind thermisch vernetzbare Gruppen (b). Bevorzugt sind die Vernetzungsmittel V im Sinne der obigen Definition wasserdispergierbar.

Das Vernetzungsmittel (V) ist in dem für das erfindungsgemäße Verfahren verwendeten Beschichtungsmittel vorzugsweise in Anteilen von 5 bis 50 Gew.-%, besonders bevorzugt von 10 bis 40 Gew.-%, bezogen auf die nicht-flüchtigen Anteile des Beschichtungsmittels, vorhanden.

Bevorzugt sind funktionelle komplementäre Gruppen (b) im Vernetzungsmittel (V), die mit den bevorzugten funktionellen Gruppen (a), ausgewählt aus der Gruppe der Hydroxyl-, Amino- und/oder Epoxygruppen reagieren. Besonders bevorzugte komplementäre Gruppen (b) sind aus der Gruppe der Carboxylgruppen, der gegebenenfalls blockierten Polyisocyanatgruppen, der Carbamatgruppen und/oder der Methylolgruppen, die gegebenenfalls teilweise oder vollständig mit Alkoholen verethert sind, ausgewählt.

Ganz besonders bevorzugt sind funktionelle komplementäre Gruppen (b) im Vernetzungsmittel (V), die mit den besonders bevorzugten Hydroxylgruppen als funktionelle Gruppen (a) reagieren, wobei (b) vorzugsweise ausgewählt ist aus der Gruppe der der gegebenenfalls blockierten Polyisocyanatgruppen und/oder der Methylolgruppen, die gegebenenfalls teilweise oder vollständig mit Alkoholen verethert sind.

Beispiele geeigneter Polyisocyanate und geeigneter Blockierungsmittel sind beispielsweise in EP-A-1 192 200 beschrieben, wobei die Blockierungsmittel insbesondere die Funktion haben, eine unerwünschte Reaktion der Isocyanatgruppen mit den reaktiven Gruppen (a) des für das erfindungsgemäße Verfahren verwendeten Polymerisats (P) sowie mit weiteren reaktiven Gruppen im weiteren Komponenten des für das erfindungsgemäße Verfahren verwendeten Beschichtungsmittels vor und während der Applikation zu verhindern. Die Blockierungsmittel werden solchermaßen ausgewählt, daß die blockierten Isocyanatgruppen erst in dem Temperaturbereich, in dem die thermische Vernetzung des Beschichtungsmittels stattfinden soll, insbesondere im Temperaturbereich zwischen 120 und 180 Grad C, wieder deblockieren und Vernetzungsreaktionen mit den funktionellen Gruppen (a) eingehen.

Als methylolgruppenhaltige Komponenten können insbesondere wasserdispergierbare Aminoplastharze, wie sie beispielsweise in EP-A-1 192 200 beschrieben sind, eingesetzt werden. Vorzugsweise werden Aminoplastharze, insbesondere Melamin-Formaldehydharze eingesetzt, welche im Temperaturbereich zwischen 100 und 180 Grad C, bevorzugt zwischen 120 und 160 Grad C, mit den funktionellen Gruppen (a), insbesondere mit Hydroxylgruppen, reagieren.

Neben den vorgenannten Bindemitteln und den bevorzugten Vernetzerungsmitteln (V) kann das für das erfindungsgemäße Verfahren verwendete Beschichtungsmittel noch weitere gegebenenfalls funktionalisierte, vorzugsweise wasserdispergierbare Bindemittelbestandteile in Anteilen von bis zu 40 Gew.-%, vorzugsweise bis zu 30 Gew.-%, bezogen auf die nicht flüchtigen Bestandteile des Beschichtungsmittels, enthalten.

Das für das erfindungsgemäße Verfahren verwendete Beschichtungsmittel kann außerdem lackübliche Additive in wirksamen Mengen enthalten. So können beispielsweise farb- und effektgebende Pigmente sowie übliche Füllstoffe in bekannten Mengen Bestandteil des Beschichtungsmittels sein. Die Pigmente und/oder Füllstoffe können aus organischen oder anorganischen Verbindungen bestehen und sind beispielhaft in der EP-A-1 192 200 aufgeführt. Weitere einsetzbare Additive /sind beispielsweise UV-Absorber, Radikalfänger, Slipadditive, Polymerisationsinihibitoren, Entschäumer, Emulgatoren, Netzmittel, Verlaufsmittel, filmbildende Hilfsmittel, rheologiesteuernde Additive sowie vorzugsweise Katalysatoren für die Reaktion der funktionellen Gruppen (a), (b) und/oder nachstehend beschriebenen Gruppen (c), und zusätzliche Vernetzungsmittel für die funktionellen Gruppen (a), (b) und/oder (c). Weitere Beispiele geeigneter Lackadditive sind beispielsweise im Lehrbuch "Lackadditive" von Johan Bieleman, Verlag Wiley-VCH, Weinheim, New York, 1998, beschrieben.

Die vorgenannten Additive sind in dem für das erfindungsgemäße Verfahren verwendete Beschichtungsmittel vorzugsweise in Anteilen von bis zu 40 Gew.-%, bevorzugt bis zu 30 Gew.-% und besonders bevorzugt von bis 20 Gew.-%, bezogen auf die nicht flüchtigen Bestandteile des Beschichtungsmittels, enthalten.

In dem für das erfindungsgemäße Verfahren verwendeten Beschichtungsmittel werden 0,1 bis 30 Gew.-%, bevorzugt zwischen 0,5 und 25 Gew.-%, besonders bevorzugt zwischen 1 und 20 Gew.-%, bezogen auf die nichtflüchtigen Anteile des Beschichtungsmittels, fester oder vorzugsweise in einer Suspension vorliegender positiv geladener anorganischer Teilchen (AT) eingearbeitet, deren Verhältnis D/d des mittleren Teilchendurchmessers (D) zu der mittleren Teilchendicke (d) > 50, vorzugsweise D/d > 100 , besonders bevorzugt D/d > 150, beträgt und deren Ladung zumindestens teilweise mit einfach geladenen organischen Gegenionen (OG) kompensiert wird. Die mittleren Teilchendurchmesser (D) können über die Auswertung von TEM (Transmissions-Elektronen-Mikroskop)-Aufnahmen ermittelt werden, während die Teilchendicken (d) experimentell über die Röntgenstrukturanalyse, Profilmessungen mittels AFM (Atomic Force Microscopy) an Einzelplättchen sowie rechnerisch in Kenntnis des molekularen Aufbaus ermittelt werden. Der mittlere Teilchendurchmesser (D) der elektrisch geladenen anorganischen Teilchen (AT) beträgt vorzugsweise zwischen 50 und 1000 nm, besonders bevorzugt zwischen 100 und 500 nm, die mittlere Teilchendicke (d) beträgt vorzugsweise zwischen 0,1 und 1,0 nm, besonders bevorzugt zwischen 0,2 und 0,75 nm. Üblicherweise werden die Teilchendicken (d) über die per Röntgenbeugung ermittelten Schichtabstände zwischen den elektrisch geladenen anorganischen Teilchen ermittelt. Der Schichtabstand umfasst die Summe aus der Teilchendicke (d) eines Teilchens und dem Abstand zwischen zwei solchen Teilchen. Letzterer ist abhängig von der Art der darin befindlichen Gegenionen, die die elektrischen Ladungsträger der Teilchen neutralisieren, sowie von der Anwesenheit quellender elektrisch neutraler Moleküle wie Wasser oder organische Lösungsmittel. So ist bekannt, dass beispielsweise der Schichtabstand im Montmorillonit als Funktion des Wassergehalts der natürlich vorkommenden Umgebungsbedingungen zwischen 0,97 und 1,5 nm variiert (J. Phys. Chem. B, 108 (2004),1255).

Die Herstellung der positiv geladenen anorganischen Teilchen (AT) kann durch Austausch der natürlich vorhandenen beziehungsweise der synthesebedingten Gegenionen der schichtförmigen Mineralien gegen die einfach geladenen organischen Gegenionen (OG) nach an sich bekannten Verfahren oder durch Synthese in Gegenwart der einfach geladenen organischen Gegenionen OG erfolgen. Dazu werden beispielsweise die positiv geladenen anorganischen Teilchen (AT) in einem geeigneten flüssigen Medium, welches in der Lage ist, die Zwischenräume zwischen den einzelnen Schichten zu quellen und in dem sich die organischen Gegenionen (OG) gelöst befinden, suspendiert und anschließend wieder isoliert (Langmuir 21 (2005), 8675).

Beim Ionenaustausch werden vorzugsweise mehr als 15 mol-%, besonders bevorzugt mehr als 30 mol-%, der synthesebedingten Gegenionen durch die einfach geladenen organischen Gegenionen (OG) ersetzt. In Abhängigkeit von der Größe und der räumlichen Orientierung der organischen Gegenionen werden die Schichtstrukturen in der Regel aufgeweitet, wobei der Abstand zwischen den elektrisch geladenen Schichten vorzugsweise um mindestens 0,2 nm, bevorzugt um mindestens 0,5 nm, aufgeweitet wird.

Die zur zumindest teilweisen Kompensation der Ladung und zur Aufweitung der anorganischen Teilchen (AT) verwendeten einfach geladenen organischen Gegenionen (OG) sind folgendermaßen aufgebaut. Als Ladungsträger für die einfach geladenen organischen Gegenionen der anorganischen Teilchen (AT) fungieren anionische Gruppen wie einfach geladene Anionen der Carbonsäure, der Sulfonsäure und/oder der Phosphonsäure. Die einfach geladenen organischen Gegenionen (OG) weisen bevorzugt Molekulargewichte von < 1.000 Dalton, besonders bevorzugt < 500 Dalton auf.

Geeignete Substanzen zur Herstellung der anorganischen Teilchen (AT) sind beispielsweise Tonmineralien, wie insbesondere natürlich vorkommende Smectit-Typen, wie Montmorillonit, Saponit, Hectorit, Fluorhectorit, Beidellit, Nontronit, Vermiculit, Halloysit und Stephanit oder synthetisch hergestellte Smectit-Typen, wie Laponite oder SOMASIF (synthetisches fluoriertes Schichtsilikat der Firma CO-OP Chemical Co., Japan). Die vorgenannten Mineralien weisen eine negative Oberflächenladung auf welche bei der Exfolierung zumindestens teilweise mit den oben genannten positiv geladenen einfach geladenen organischen Gegenionen (OG), kompensiert wird.

In Sinne der Erfindung besonders bevorzugt sind kationisch geladene anorganische Teilchen (AT), wie insbesondere die gemischten Hydroxide der Formel:

(M₍₁₋ₓ₎²⁺Mₓ³⁺(OH)₂)(A_{x/y}^{y-})·nH₂O

wobei M²⁺ zweiwertige Kationen, M³⁺ dreiwertige Kationen und (A) Anionen mit einer Wertigkeit y darstellen, wobei x einen Wert von 0,05 bis 0,5 einnimmt.

Besonders bevorzugt sind als zweiwertige Kationen M²⁺ Calcium-, Zink-und/oder Magnesiumionen und als dreiwertige Kationen M³⁺ Aluminiumionen und als Anionen (A) Chloridionen, Phosphationen, Sulfationen und/oder Carbonationen, weil diese Ionen weitestgehend gewährleisten, daß keine Veränderung des Farbtons beim Aushärten der erfindungsgemäßen Schicht auftritt. Die Synthese der gemischten Hydroxide ist bekannt (beispielsweise Eilji Kanezaki, Preparation of Layered Double Hydroxides in Interface Science and Technology, Vol1, Chapter 12, page 345ff - Elsevier, 2004, ISBN 0-12-088439-9). Sie erfolgt meist aus den Mischungen der Salze der Kationen in wäßriger Phase bei definierten, konstant gehaltenen basischen pH-Werten. Man erhält die gemischten Hydroxide, enthaltend die Anionen der Metallsalze als in den Zwischenräumen eingelagerte anorganische Gegenionen. Erfolgt die Synthese in Gegenwart von Kohlendioxid , erhält man in der Regel das gemischte Hydroxid mit eingelagerten Carbonationen. Führt man die Synthese unter Ausschluss von Kohlendioxid beziehungsweise Carbonat in Anwesenheit einfach geladener organischer Anionen (OA) oder deren sauren Vorstufen durch, erhält man in der Regel das gemischte Hydroxid mit in den Zwischenräumen eingelagerten organischen Anionen (coprecipitation method oder Templatmethode). Eine alternative Syntheseroute zur Herstellung der gemischten Hydroxide besteht in der Hydrolyse der Metallalkoholate in Gegenwart der gewünschten, einzulagernden Anionen (US-A-6,514,473). Weiterhin ist es möglich, die einzulagernden einfach geladenen organischen Anionen (OA) durch Ionenaustausch an gemischten Hydroxiden mit eingelagerten Carbonationen einzubringen. Dieses kann beispielsweise insbesondere bei der Herstellung von Hydrotalciten und Hydrocalumiten durch Rehydratisierung des amorphen calcinierten gemischten Oxids in Gegenwart der gewünschten einzulagernden Anionen (OA) erfolgen. Die Calcinierung des gemischten Hydroxids, enthaltend eingelagerte Carbonationen, bei Temperaturen < 800°C liefert das amorphe gemischtes Oxid unter Erhalt der Schichtstrukturen (rehydration method).

Alternativ kann der Ionenaustausch in wäßrigem oder alkoholisch wäßrigem Medium in Gegenwart der sauren Vorstufen der einzulagernden organischen Anionen erfolgen. Dabei ist je nach Säurestärke der Vorstufe der einzulagernden einfach geladenen organischen Anionen (OA) eine Behandlung mit verdünnten Mineralsäuren notwendig, um die Carbonationen zu entfernen.

Die zur zumindest teilweisen Kompensation der Ladung und zur Aufweitung der vorgenannten gemischten Hydroxide verwendeten einfach geladenen organischen Anionen (OA) weisen als Ladungsträger vorzugsweise anionische Gruppen (AG) auf, wie besonders bevorzugt einfach geladene Anionen der Carbonsäure, der Sulfonsäure und/oder der Phosphonsäure.

In einer weiteren bevorzugten Ausführungsform der Erfindung tragen die einfach geladenen organischen Gegenionen (OG) zusätzlich funktionelle Gruppen (c), welche mit den funktionellen Gruppen (a) des Bindemittels BM und/oder den funktionellen Gruppen (b) des Vernetzers beim Aushärten des Beschichtungsmittel unter Ausbildung kovalenter Bindungen reagieren. Die Gruppen (c) können strahlen- und/oder thermisch härtbar sein. Bevorzugt sind thermisch härtbare Gruppen (c), wie sie oben bei der Beschreibung der Gruppen (a) und (b) aufgeführt sind. Besonders bevorzugt sind die funktionellen Gruppen (c) ausgewählt aus der Gruppe Hydroxyl-, Epoxy- und/oder Aminogruppen.

Die funktionellen Gruppen (c) sind von den anionischen Gruppen (AG) der einfach geladenen organischen Anionen (OA) vorzugsweise durch einen Spacer (SP) getrennt, wobei (SP) ausgewählt ist aus der Gruppe der gegebenenfalls mit Heteroatomen, wie Stickstoff, Sauerstoff und/oder Schwefel, modifizierten und gegebenenfalls substituierten A-liphaten und/oder Cycloaliphaten mit insgesamt 3 bis 30 Kohlenstoffatomen, bevorzugt zwischen 4 und 20 Kohlenstoffatomen, besonders bevorzugt zwischen 5 und 15 Kohlenstoffatomen, der gegebenenfalls mit Heteroatomen, wie Stickstoff, Sauerstoff und/oder Schwefel, modifizierten und gegebenenfalls substituierten Aromaten mit insgesamt 3 bis 20 Kohlenstoffatomen, bevorzugt zwischen 4 und 18 Kohlenstoffatomen, besonders bevorzugt zwischen 5 und 15 Kohlenstoffatomen, und/oder der Teilstrukturen der oben angeführten Cycloaliphaten und Aromaten, wobei sich in den Teilstrukturen insbesondere mindestens 3 Kohlenstoffatome und/oder Heteroatome zwischen der funktionellen Gruppe (c) und der anionischen Gruppe (AG) befinden.

Besonders bevorzugt sind die Spacer (SP) der einfach geladenen organischen Anionen (OA) gegebenenfalls substituierte Phenyl- oder Cyclohexylreste, welche die funktionelle Gruppe (c) in m- oder p-Stellung zur anionischen Gruppe (AG) aufweisen. Insbesondere werden hierbei als funktionelle Gruppe (c) Hydroxyl- und/oder Aminogruppen und als anionische Gruppe (AG) Carboxylat- und/oder Sulfonatgruppen eingesetzt.

Ganz besonders bevorzugt sind als einfach geladenen organische Anionen (OA) m- oder p-Aminobenzolsulfonat, m- oder p-Hydroxybenzolsulfonat, m- oder p-Aminobenzoat und/oder m- oder p-Hydroxybenzoat.

Bei den oben genannten besonders bevorzugten gemischten Hydroxiden, die synthesebedingt bevorzugt Carbonat als Anion (A) enthalten, werden beim Ionenaustausch vorzugsweise mehr als 15 mol-%, besonders bevorzugt mehr als 30 mol-%, der Anionen (A) durch die einfach geladenen organischen Anionen (OA) ersetzt.

Bevorzugt wird die Modifikation der kationisch geladenen anorganischen Teilchen (AT) in einem separaten Verfahren vor der Einarbeitung in das erfindungsgemäße Beschichtungsmittel durchgeführt, wobei dieses Verfahren besonders bevorzugt im wäßrigen Medium durchgeführt wird. Bevorzugt werden die mit den einfach geladenen organischen Anionen (OA) modifizierten elektrisch geladenen anorganischen Teilchen (AT) in einem Syntheseschritt hergestellt. Die solchermaßen hergestellte Teilchen haben nur eine sehr geringe Eigenfarbe, sie sind vorzugsweise farblos.

Die mit einfach geladenen organischen Anionen (OA) modifizierten kationisch geladenen Teilchen können in einem Syntheseschritt insbesondere aus den Metallsalzen der Kationen und den organischen Anionen hergestellt werden Dabei wird vorzugsweise in eine wäßrige alkalische Lösung des einfach geladenen organischen Anions (OA) eine wäßrige Mischung von Salzen der zweiwertigen Kationen M²⁺ und der dreiwertigen Kationen M³⁺ eingetragen, bis die gewünschte Stöchiometrie eingestellt ist. Die Zugabe erfolgt vorzugsweise in CO₂-freier Atmosphäre, vorzugsweise unter Inertgasatmosphäre, beispielsweise unter Stickstoff, unter Rühren bei Temperaturen zwischen 10 und 100 Grad C, bevorzugt bei Raumtemperatur, wobei der pH-Wert der wäßrigen Reaktionsmischung, vorzugsweise durch Zugabe alkalischer Hydroxide, bevorzugt NaOH, im Bereich von 8 bis 12, bevorzugt zwischen 9 und 11 gehalten wird. Nach Zugabe der wäßrigen Mischung der Metallsalze wird die resultierende Suspension bei den vorgenannten Temperaturen während eines Zeitraums von 0,1 bis 10 Tagen, vorzugsweise 3 bis 24 Stunden gealtert, der resultierende Niederschlag, vorzugsweise durch Zentrifugieren, isoliert und mehrfach mit entionisiertem Wasser gewaschen. Danach wird aus dem gereinigten Niederschlag mit Wasser eine Suspension der mit den einfach geladenen organischen Anionen (OA) modifierten kationisch geladenen Teilchen (AT) mit einem Festkörpergehalt von 5 bis 50 Gew.-%, vorzugsweise von 10 bis 40 Gew.-%, hergestellt.

Die solchermaßen hergestellten Suspensionen der modifizierten positiv geladenen anorganischen Teilchen (AT) können im erfindungsgemäßen Verfahren zur Herstellung des Beschichtungsmittels prinzipiell während jeder Phase eingearbeitet werden, das heißt vor, während und/oder nach der Zugabe der übrigen Komponenten des Beschichtungsmittels.

Die Kristallinität der erhaltenen schichtförmigen doppelten gemischten Hydroxide als modifizierte positiv geladene anorganische Teilchen (AT) ist abhängig von den gewählten Syntheseparametern, der Art der eingesetzten Kationen, dem Verhältnis der M²⁺/M³⁺ Kationen sowie der Art und der Menge der eingesetzten Anionen und sollte möglichst große Werte annehmen.

Die Kristallinität der gemischten Hydroxidphase kann als berechnete Grösse der kohärenten Streudomänen aus der Analyse der entsprechenden Röntgenbeugungslinien ausgedrückt werden, z.B. die Reflexe [003] und [110] im Falle des Mg-Al-Hydrotalcits. So zeigen beispielsweise Eliseev et.al. (Doklady Chemistry 387 (2002), 777) den Einfluss der thermischen Alterung auf das Anwachsen der Domänengrösse des untersuchten Mg-Al-Hydrotalcits und erklären dieses mit dem fortschreitenden Einbau noch vorhandenen tetredrisch koordinierten Aluminiums in die gemischte Hydroxidschicht als oktaedrisch koordiniertes Aluminium, nachgewiesen über die relativen Intensitäten der entsprechenden Signale im ²⁷Al - NMR-Spektrum.

Vorzugsweise werden die erfindungsgemäßen, bevorzugt wäßrigen Beschichtungsmittel hergestellt, indem zunächst alle Bestandteile des Beschichtungsmittel außer den modifizierten positiv geladenen anorganischen Teilchen (AT) und dem Vernetzungsmittel (V) gemischt werden. In die resultierende Mischung werden die modifizierten positiv geladenen anorganischen Teilchen (AT) oder bevorzugt die vorzugsweise nach oben angeführtem Verfahren hergestellte Suspension der modifizierten positiv geladenen anorganischen Teilchen (AT) unter Rühren eingetragen, bevorzugt bis die Suspension vollständig aufgelöst ist, was durch optische Methoden, insbesondere durch visuelle Begutachtung, verfolgt wird.

Die resultierende Mischung wird vorzugsweise bei Temperaturen zwischen 10 und 50 Grad C während eines Zeitraums von 2 bis 30 Minuten, vorzugsweise von 5 bis 20 Minuten, bevorzugt bei Raumtemperatur, unter Rühren mit Ultraschall zur Erzielung einer feinteiligeren, homogeneren Dispergierung der Präparation der anorganischen Teilchen AT behandelt, wobei in einer besonders bevorzugten Ausführungsform die Spitze einer Ultraschallquelle in die Mischung getaucht wird. Während der Ultraschall-Behandlung kann die Temperatur der Mischung um 10 bis 60 K ansteigen. Die solchermaßen erhaltene Dispersion wird vorzugsweise mindestens 12 Stunden unter Rühren bei Raumtemperatur gealtert. Hiernach wird das Vernetzungsmittel (V) unter Rühren hinzugefügt und die Dispersion vorzugsweise mit Wasser auf einen Festkörpergehalt von 15 bis 50 Gew.-%, vorzugsweise 20 bis 40 Gew.-% eingestellt.

Die Beschichtungsmittel werden im erfindungsgemäßen Verfahren vorzugsweise in einer solchen Naßfilmdicke aufgetragen, daß nach der Aushärtung in der fertigen Schichten eine Trockenschichtdicke zwischen 1 und 100 µm, bevorzugt zwischen 5 und 75 µm, besonders bevorzugt zwischen 10 und 60 µm, insbesondere zwischen 15 und 50 µm resultiert.

Die Applikation des Beschichtungsmittels im erfindungsgemäßen Verfahren kann durch übliche Applikationsmethoden, wie beispielsweise Spritzen, Rakeln, Streichen, Gießen, Tauchen oder Walzen erfolgen. Vorzugsweise werden Spritzapplikationsmethoden angewandt, wie beispielsweise Druckluftspritzen, Airless-Spritzen, Hochrotations-Spritzen und elektrostatischem Sprühauftrag (ESTA). Die Applikation wird in der Regel bei Temperaturen von maximal 70 bis 80 Grad C durchgeführt, so daß geeignete Applikationsviskositäten erreicht werden können, ohne daß bei der kurzzeitig einwirkenden thermischen Belastung eine Veränderung oder Schädigung des Beschichtungsmittels sowie seines gegebenenfalls wiederaufzubereitenden Oversprays eintritt.

Die Strahlenhärtung der applizierten Schicht im erfindungsgemäßen Verfahren mit dem Beschichtungsmittel mit durch Strahlung vernetzbaren Gruppen erfolgt mit aktinischer Strahlung, insbesondere mit UV-Strahlung, vorzugsweise in einer inerten Atmosphäre, wie beispielsweise in WO-A-03/016413 beschrieben.

Die bevorzugte thermische Härtung der applizierten Schicht im erfindungsgemäßen Verfahren mit dem Beschichtungsmittel mit thermisch vernetzbaren Gruppen erfolgt im erfindungsgemäßen Verfahren nach den bekannten Methoden, wie beispielsweise durch Erhitzen in einem Umluftofen oder durch Bestrahlen mit Infrarot-Lampen. Vorteilhafterweise erfolgt die thermische Härtung bei Temperaturen zwischen 100 und 180 Grad C, bevorzugt zwischen 120 und 160 Grad C, während einer Zeit zwischen 1 Minute und 2 Stunden, bevorzugt zwischen 2 Minuten und 1 Stunde, besonders bevorzugt zwischen 10 und 45 Minuten. Werden Substrate, wie beispielsweise Metalle, verwendet, die thermisch stark belastbar sind, kann die Härtung auch bei Temperaturen oberhalb von 180 Grad C durchgeführt werden. Im allgemeinen empfiehlt es sich aber, Temperaturen von 160 bis 180 Grad C nicht zu überschreiten. Werden hingegen Substrate, wie beispielsweise Kunststoffe, verwendet, die thermisch nur bis zu einer Höchstgrenze belastbar sind, ist die Temperatur und die benötigte Zeit für den Härtungsvorgang auf diese Höchstgrenze abzustimmen.

Das vorgenannte Beschichtungsmittel wird erfindungsgemäß zur Erhöhung der Steinschlagfestigkeit in OEM-Schichtaufbauten auf metallischen Substraten und/oder Kunststoffsubstraten eingesetzt, die von Substrat her gesehen aus einer elektrolytisch abgeschiedenen Korrosionsschutzschicht, vorzugsweise einer kathodisch abgeschiedenen Schicht, aus einer darauf applizierten Füllerschicht und einer auf der Füllerschicht applizierten Decklackschicht, welche vorzugsweise aus einem farbgebenden Basislack und einem abschließenden Klarlack aufgebaut ist, bestehen. Dabei werden die erfindungsgemäß hergestellten Beschichtungsmittel zum Aufbau mindestens einer der Schichten im OEM-Schichtaufbau eingesetzt. Bevorzugt werden die erfindungsgemäß hergestellten Beschichtungsmittel zum Aufbau der Füllerschicht eingesetzt.

Beim Einsatz des erfindungsgemäß hergestellten Beschichtungsmittels als Füller wird vorzugsweise der Elektrotauchlack, insbesondere der kathodische Tauchlack, vor Auftrag des erfindungsgemäßen Beschichtungsmittels ausgehärtet. In einem weiteren bevorzugten Verfahren wird auf die aus dem erfindungsgemäßen Beschichtungsmittel gebildete Schicht in zwei weiteren Stufen zunächst ein Basislack und abschließend ein Klarlack aufgetragen. Dabei wird in einem bevorzugten Verfahren zunächst die Schicht aus dem erfindungsgemäßen Beschichtungsmittel ausgehärtet und hiernach vorzugsweise in einem ersten Schritt ein wäßriger Basislack aufgetragen und nach einer Zwischenablüftung während einer Zeit zwischen 1 bis 30 Minuten, vorzugsweise zwischen 2 und 20 Minuten, bei Temperaturen zwischen 40 und 90 Grad C, vorzugsweise zwischen 50 und 85 Grad C, und in einem zweiten Schritt mit einem Klarlack, vorzugsweise einem Zweikomponenten-Klarlack, überschichtet, wobei Basislack und Klarlack gemeinsam ausgehärtet werden. In einer weiteren bevorzugten Ausführungsform der Erfindung wird die mit dem erfindungsgemäßen Beschichtungsmittel hergestellte Füllerschicht vor Auftrag der Basislackschicht während einer Zeit zwischen 1 bis 30 Minuten, vorzugsweise zwischen 2 und 20 Minuten, bei Temperaturen zwischen 40 und 90 Grad C, vorzugsweise zwischen 50 und 85 Grad C abgelüftet. Hiernach werden Füllerschicht, Basislackschicht und Klarlackschicht gemeinsam ausgehärtet.

Die solchermaßen hergestellten OEM-Schichtaufbauten zeigen eine ausgezeichnete Beständigkeit gegen Schlagbeanspruchung, insbesondere gegen Steinschlag. Im Vergleich zu OEM-Schichtaufbauten mit Füllern des Standes der Technik wird insbesondere eine Reduktion des Anteils der beschädigten Oberfläche und eine sehr deutliche Reduktion des Anteils der vollständig abgetragenen Oberfläche, das heißt des Flächenanteils der ungeschützten Substrats, beobachtet. Neben diesen herausragenden Eigenschaften weisen die mit den erfindungsgemäßen Beschichtungsmitteln hergestellten Beschichtungen eine ausgezeichnete Schwitzwasserbeständigkeit, eine ausgezeichnete Haftung zur Korrosionsschutzschicht und zur Decklackschicht, insbesondere zur Basislackschicht sowie eine ausgezeichnete Stabilität der Eigenfarbe nach dem Aushärten auf, was auch einen Einsatz der erfindungsgemäß hergestellten Beschichtungsmittel als Decklackkomponente ermöglicht. Weiterhin sind mit dem erfindungsgemäßen Beschichtungsmittel Beschichtungen mit vergleichsweise niedriger Einbrenntemperatur und gutem Decklackstand realisierbar.

Die folgenden Beispiele sollen die Erfindung veranschaulichen.

### Beispiele

### Herstellbeispiel 1: Synthese und Modifizierung von Hydrotalcit

Einer 0,21-molaren wäßrigen Lösung von 4-Aminobenzolsulfonsäure (4-absa) wird eine wäßrige Mischung aus MgCl₂·6H₂O (0,52-molar) und AlCl₃·6H₂O (0,26-molar) bei Raumtemperatur unter Stickstoffatmosphäre und ständigem Rühren über 3 Stunden zugegeben, wobei die zudosierte Menge Kationen so gewählt wird, daß ein Molverhältnis des 4-absa-Gegenions zum dreiwertigen Al-Kation von 4:1 resultiert. Dabei wird der pH-Wert durch Zugabe einer 3-molaren NaOH-Lösung konstant bei pH = 10 gehalten.

Nach Zugabe der wäßrigen Mischung der Metallsalze wird die resultierende Suspension bei Raumtemperatur 3 Stunden gealtert. Der resultierende Niederschlag wird durch Zentrifugieren isoliert und 4 Mal mit entionisiertem Wasser gewaschen.

Die resultierende Suspension des weißen Reaktionsprodukts Mg₂Al(OH)₆(4-absa)·2H₂O (Hydrotalcit-Suspension) hat einen Festkörpergehalt von 26,3 Gew.-% und einen pH-Wert von 10.

### Herstellbeispiel 2: Formulierung des erfindungsgemäßen Beschichtungsmittels

16,1 g der gemäß Beispiel 1 hergestellten Hydrotalcit-Suspension werden unter Rühren in 88,9 g einer wäßrigen Polyurethan-Dispersion mit einem Feststoffgehalt von 40 Gew.-% (DAOTAN VTW 1225 der Fa. CYTEC Corp. mit einer OH-Zahl nach DIN EN ISO 4629 von 45 und einer Säurezahl nach DIN EN ISO 3682 von 40 mg KOH/g) eingetragen bis die Hydrotalcit-Suspension vollständig aufgelöst ist (visuelle Begutachtung).Die resultierende Dispersion wird 15 Minuten bei Raumtemperatur unter Rühren mit Ultraschall behandelt, wobei die Spitze einer Ultraschallquelle (Sonotrode UP 100H der Fa. Hielscher GmbH) in die Dispersion getaucht wird und die Amplitude und Pulsrate bei einer Arbeitfrequenz von 30 kHz jeweils auf 100% gesetzt werden. Während der Ultraschall-Behandlung steigt die Temperatur der Dispersion auf 65 Grad C.

Die resultierende Dispersion wird 12 Stunden gealtert und danach unter Rühren bei Raumtemperatur mit 9,6 g Melaminformaldehyd-Harz (Maprenal MF 900 der Fa. Ineos Melamines GmbH) versetzt.

Nach Zusatz von weiteren 50 g deionisertem Wasser resultiert eine wäßrige Dispersion mit einem Festkörpergehalt von 28,0 Gew.-% und einem pH-Wert von 7,4.

### Beispiel 3: Applikation des erfindungsgemäßen Beschichtungsmittel und Prüfung der Steinschlagfestigkeit

Das gemäß Beispiel 2 hergestellte erfindungsgemäße Beschichtungsmittel wird auf vorbehandelte und mit einem kathodischen Tauchlack vorbeschichtete Stahltafeln (Stahltafeln der Fa. Chemetall: Dicke des eingebrannten kathodischen Taucklacks: 21 +/- 2 µm, Dicke des Substrats: 750 µm) mittels Sprühen appliziert (Automatic-Coater der Fa. Köhne). Die resultierende Schicht aus dem erfindungsgemäßen Beschichtungsmittel wird 20 Minuten bei 140 Grad C ausgehärtet, wobei eine Trockenfilmdicke von 30 +/- 3 µm resultiert. Die Auswertung von TEM-Aufnahmen von Querschnitten des eingebrannten Beschichtungsmittels zeigt, dass das Verhältnis (D/d) der mittleren Teilchendurchmesser (D) der dispergierten Hydrotalcit-Teilchen zu deren mittlerer Teilchendicke (d) ca. 200 beträgt.

Zu Vergleichszwecken wird auf die vorbehandelten und mit einem kathodischen Tauchlack vorbeschichteten Stahltafeln ein handelsüblicher Füller (FU43-9000 der Fa. BASF Coatings AG: Referenzfüller) solchermaßen aufgebracht und gemäß Herstellerangaben 20 Minuten bei 150 Grad C ausgehärtet, daß ebenfalls eine Trockenfilmdicke von 30 +/- 3 µm resultiert.

Auf die solchermaßen vorbeschichteten Tafeln wird zur Herstellung eines OEM-Schichtaufbaus weiterhin in separaten Schritten zunächst ein handelsüblicher Wasserbasislack (FV95-9108 der Fa. BASF Coatings AG) aufgebracht, 10 Minuten bei 80 Grad C abgelüftet und abschließend ein lösemittelhaltiger 2-Komponenten-Klarlack (FF95-0118 der Fa. BASF Coatings AG) aufgebracht. Die Wasserbasislack- und die Klarlackschicht werden gemeinsam 20 Minuten bei 140 Grad C ausgehärtet, wonach die Basislackschicht eine Trockenfilmdicke von ca. 15 µm und die Klarlackschicht eine Trockenfilmdicke von 45 µm aufweisen.

Die solchermaßen beschichteten Tafeln werden 3 Tage bei 23 Grad C und 50% relativer Luftfeuchte gelagert.

### Prüfung der Steinschlagfestiakeit:

Die wie oben beschrieben hergestellten beschichteten Stahltafeln werden einem Steinschlag-Test nach DIN 55996-1 unterzogen, wobei jeweils 500 g gekühltes Eisengranulat (4 bis 5 mm Teilchendurchmesser, Fa.Würth, Bad Friedrichshall) benutzt werden und ein Luftdruck von 2 bar an der Beschußvorrichtung (Modell 508 VDA der Fa. Erichsen) eingestellt wird.

Nach Reinigung der solchermaßen beschädigten Testtafeln werden diese in eine Lösung eines sauren Kupfersalzes getaucht, wobei elementares Kupfer an den Stellen des Stahlsubstrats abgeschieden wird, an denen die Beschichtung durch den Beschuß vollständig entfernt wurde. Das Schadensbild auf jeweils 10 cm² der beschädigten und nachbehandelten Testtafeln werden mittels einer Bildverarbeitungs-Software (SIS-Analyse, BASF Coatings AG, Münster) erfaßt. Ausgewertet werden die Anteile der durch Beschuß beschädigten Oberflächen sowie der Anteile der vollständig abgetragenen Oberflächen, jeweils bezogen auf die Gesamtoberfläche.

In Tabelle 1 sind die Ergebnisse aufgeführt.

**Tabelle 1- Schadensbilder der mit dem erfindungsgemäßen Beschichtungsmittel sowie mit dem Referenz-Füller hergestellten Schichtaufbauten**

| | erfindungsgemäße Beschichtung (Beispiel 2) | Referenz-Füller |
|---|---|---|
| Anteil der vollständig abgetragenen Oberfläche (Flächen-%) | < 0,1 | 0,6 |
| Anteil der durch Beschuß beschädigten Oberfläche (Flächen-%) | 5 | 10 |

Gegenüber den mit dem Referenz-Füller hergestellten Schichtaufbauten weisen die mit dem erfindungsgemäßen Beschichtungsmittel als Füllermaterial hergestellten Schichtaufbauten eine Reduktion des Anteils der beschädigten Oberfläche um 50% und eine sehr deutliche Reduktion des Anteils der vollständig abgetragenen Oberfläche, das heißt des Flächenanteils der ungeschützten Metallsubstrats, um über 80% auf.

Die Haftung zur Schicht aus dem kathodischen Tauchlack und zur Basislackschicht ist ausgezeichnet, was sich in einer deutlich reduzierten Delamination an den Schichtgrenzen niederschlägt.

Die mit dem erfindungsgemäßen Beschichtungmittel hergestellten Beschichtung weist darüber hinaus eine ausgezeichnete Schwitzwasserbeständigkeit und eine praktisch unveränderte Eigenfarbe nach dem Einbrennen auf.

## Patentansprüche

1. Verfahren zur Erhöhung der Steinschlagfestigkeit von OEM-Schichtaufbauten, bestehend aus einer Korrosionsschicht, einer Füllerschicht und einer abschließenden Decklackschicht, **dadurch gekennzeichnet, dass** in das zur Herstellung mindestens einer der genannten Schichten verwendete wässrige Beschichtungsmittel, enthaltend mindestens ein filmbildendes wasserdispergierbares Polymerisat (WP), 0,1 bis 30 Gew.-%, bezogen auf die nichtflüchtigen Anteile des Beschichtungsmittels, positiv geladener anorganischer Teilchen (AT), deren Verhältnis D/d des mittleren Teilchendurchmessers (D) zur mittleren Teilchendicke (d) > 50 beträgt und deren Ladung zumindestens teilweise mit einfach geladenen organischen Gegenionen (OG) kompensiert wird, eingetragen wird, wobei die positiv geladenen anorganischen Teilchen (AT) beim Eintragen in das Beschichtungsmittel in einer wässrigen Suspension vorliegen,
das Beschichtungsmittel aufgetragen und abschließend ausgehärtet wird.

2. Verfahren nach Anspruch 1, **dadurch gekennzeichnet, dass** in den positiv geladenen anorganischen Teilchen (AT) mindestens 15 mol-% der synthesebedingten Gegenionen durch die organischen Gegenionen (OG) ersetzt sind.

3. Verfahren nach einem der Ansprüche 1 bis 2, **dadurch gekennzeichnet, dass** die anorganischen Teilchen (AT) mindestens ein gemischtes Hydroxid der allgemeinen Formel
(M(₁ₓ)²⁺Mₓ³⁺(OH)₂)(A_{x/y}^{y-})nH₂O
enthalten, wobei M²⁺zweiwertige Kationen, M³⁺ dreiwertige Kationen und (A) Anionen mit einer Wertigkeit y darstellen und wobei zumindestens ein Teil der Anionen (A) durch einfach geladene organische Anionen (OA) als organische Gegenionen (OG) ersetzt sind.

4. Verfahren nach einem der Ansprüche 1 bis 3, **dadurch gekennzeichnet, dass** das Polymerisat (P) im Beschichtungsmittel mindestens eine vernetzbare funktionelle Gruppe (a) enthält.

5. Verfahren nach einem der Ansprüche 1 bis 4, **dadurch gekennzeichnet, dass** das Beschichtungsmittel ein Vernetzungsmittel (V) mit mindestens zwei vernetzbaren funktionellen Gruppen (b) enthält, welche mit den funktionellen Gruppen (a) des Polymerisats P beim Aushärten des Beschichtungsmittels unter Ausbildung kovalenter Bindungen reagieren.

6. Verfahren nach einem der Ansprüche 1 bis 5, **dadurch gekennzeichnet, dass** im Beschichtungsmittel 10 bis 95 Gew.-% des Bindemittels, enthaltend das Polymerisat P, und 5 bis 50 Gew.-%, des Vernetzungsmittels (V), jeweils bezogen auf die nicht-flüchtigen Bestandteile des Beschichtungsmittels, enthalten sind.

7. Verfahren nach einem der Ansprüche 1 bis 6, **dadurch gekennzeichnet, dass** die einfach geladenen organischen Gegenionen (OG) mindestens eine vernetzbare funktionelle Gruppe (c) aufweisen, welche mit den funktionellen Gruppen (a) und/oder (b) beim Aushärten des Beschichtungsmittels unter Ausbildung einer kovalenten Bindung reagiert.

8. Verfahren nach einem der Ansprüche 1 bis 7, **dadurch gekennzeichnet, dass** die mit dem Beschichtungsmittel hergestellte Schicht nach der Aushärtung eine Trockenfilmdichte von 5 bis 75 µm aufweist.

9. Verfahren nach einem der Ansprüche 1 bis 8, **dadurch gekennzeichnet, dass** das Beschichtungsmittel zur Herstellung der Füllerschicht eines OEM-Schichtaufbaus eingesetzt wird.

10. Verfahren nach Anspruch 9, **dadurch gekennzeichnet, dass** bei der Herstellung des OEM-Schichtaufbaus die Füllerschicht ausgehärtet wird, in weiteren Schritten eine Basislackschicht und nach einer Zwischenablüftung eine abschließende Klarlackschicht aufgetragen wird und abschließend die Basislackschicht und die Klarlackschicht gemeinsam ausgehärtet werden.

11. Verfahren nach Anspruch 9, **dadurch gekennzeichnet, dass** bei der Herstellung des OEM-Schichtaufbaus die Füllerschicht aufgetragen und abgelüftet wird, in weiteren Schritten eine Basislackschicht und nach einer Zwischenablüftung eine abschließende Klarlackschicht aufgetragen wird und abschließend die Füllerschicht, die Basislackschicht und die Klarlackschicht gemeinsam ausgehärtet werden.

## Claims

1. Method of increasing the stonechip resistance of OEM coat systems composed of an anticorrosion coat, a surfacer coat, and a concluding topcoat, **characterized in that**,
into the aqueous coating material that is used to produce at least one of said coats and that comprises at least one film-forming waterdispersible polymer (WP), there is introduced 0.1 to 30% by weight, based on the nonvolatile fractions of the coating material, of positively charged inorganic particles (AT) whose ratio D/d, the ratio of the average particle diameter (D) to the average particle thickness (d), is > 50 and whose charge is at least partly compensated by singly charged organic counterions (OG), the positively charged inorganic particles (AT), on introduction into the coating material, being in an aqueous suspension,
the coating material is applied, and, lastly, is cured.

2. Method according to Claim 1, **characterized in that** at least 15 mol% of the counterions resulting from synthesis in the positively charged inorganic particles (AT) have been replaced by the organic counterions (OG).

3. Method according to either of Claims 1 and 2, **characterized in that** the inorganic particles (AT) comprise at least one mixed hydroxide of the general formula
(M₍₁₋ₓ₎²⁺Mₓ³⁺(OH)₂)(A_{x/y}^{y-})·nH₂O
where M²⁺ represents divalent cations, M³⁺ represents trivalent cations, and (A) represents anions having a valence y, and where at least some of the anions (A) have been replaced by singly charged organic anions (OA) as organic counterions (OG).

4. Method according to any one of Claims 1 to 3, **characterized in that** the polymer (P) in the coating material contains at least one crosslinkable functional group (a).

5. Method according to any one of Claims 1 to 4, **characterized in that** the coating material comprises a crosslinking agent (V) having at least two crosslinkable functional groups (b), which when the coating material is cured react with the functional groups (a) of the polymer P with formation of covalent bonds.

6. Method according to any one of Claims 1 to 5, **characterized in that** the coating material contains 10% to 95% by weight of the binder comprising the polymer P, and 5% to 50% by weight of the crosslinking agent (V), based in each case on the nonvolatile constituents of the coating material.

7. Method according to any one of Claims 1 to 6, **characterized in that** the singly charged organic counterions (OG) have at least one crosslinkable functional group (c) which when the coating material is cured reacts with the functional groups (a) and/or (b) with formation of a covalent bond.

8. Method according to any one of Claims 1 to 7, **characterized in that** the coat produced with the coating material has a dry film thickness, after curing, of 5 to 75 µm.

9. Method according to any one of Claims 1 to 8, **characterized in that** the coating material is used to produce the surfacer coat of an OEM coat system.

10. Method according to Claim 9, **characterized in that**, in the production of the OEM coat system, the surfacer film is cured, in further steps a basecoat film and, after flashing off in between, a concluding clearcoat film is applied, and, lastly, the basecoat film and the clearcoat are jointly cured.

11. Method according to Claim 9, **characterized in that**, in the production of the OEM coat system, the surfacer film is applied and flashed off, in further steps a basecoat film and, after flashing off in between, a concluding clearcoat film is applied, and, lastly, the surfacer film, the basecoat film, and the clearcoat film are jointly cured.

## Revendications

1. Procédé pour l'augmentation de la résistance au gravillonnage de systèmes de couches OEM, consistant en une couche anticorrosion, une couche d'apprêt de garnissage et une couche finale de peinture de finition, **caractérisé en ce que** dans la composition aqueuse de revêtement utilisée pour la production d'au moins l'une des couches nommées, contenant au moins un polymérisat filmogène dispersable dans l'eau (PD), on introduit 0,1 à 30 % en poids, par rapport aux fractions non volatiles de la composition de revêtement, de particules inorganiques (PI) chargées positivement, dont le rapport D/d du diamètre moyen de particule (D) à l'épaisseur moyenne de particule (d) est > 50 et dont la charge est au moins en partie compensée par des ions opposés organiques (IO) à une seule charge, les particules inorganiques (PI) chargées positivement se trouvant en une suspension aqueuse lors de l'introduction dans la composition de revêtement, on applique le revêtement et enfin on le fait durcir.

2. Procédé selon la revendication 1, **caractérisé en ce que** dans les particules inorganiques (PI) chargées positivement au moins 15 % en moles des ions opposés dus à la synthèse sont remplacés par des ions opposés organiques (IO).

3. Procédé selon l'une quelconque des revendications 1 et 2, **caractérisé en ce que** les particules inorganiques (PI) contiennent au moins un hydroxyde mixte de formule générale
(M₍₁₋ₓ₎²⁺Mₓ³⁺(OH)₂)(A_{x/y}^{y-})nH₂O
M²⁺ représentant des cations divalents, M³⁺ des cations trivalents et (A) des anions ayant une valence y et au moins une partie des anions (A) étant remplacés par des anions organiques (AO) à une seule charge, en tant qu'ions opposés organiques (IO).

4. Procédé selon l'une quelconque des revendications 1 à 3, **caractérisé en ce que** le polymérisat (P) dans la composition de revêtement contient au moins un groupe fonctionnel réticulable (a).

5. Procédé selon l'une quelconque des revendications 1 à 4, **caractérisé en ce que** la composition de revêtement contient un agent de réticulation (AR) comportant au moins deux groupes fonctionnels réticulables (b), qui réagissent avec les groupes fonctionnels (a) du polymérisat P, lors du durcissement de la composition de revêtement, avec formation de liaisons covalentes.

6. Procédé selon l'une quelconque des revendications 1 à 5, **caractérisé en ce que** dans la composition de revêtement sont contenus 10 à 95 % en poids du liant, contenant le polymérisat P, et 5 à 50 % en poids de l'agent de réticulation (AR), chaque fois par rapport aux composants non volatils de la composition de revêtement.

7. Procédé selon l'une quelconque des revendications 1 à 6, **caractérisé en ce que** les ions opposés organiques (IO) à une seule charge comportent au moins un groupe fonctionnel réticulable (c), qui réagit avec les groupes fonctionnels (a) et/ou (b), lors du durcissement de la composition de revêtement, avec formation d'une liaison covalente.

8. Procédé selon l'une quelconque des revendications 1 à 7, **caractérisé en ce que** la couche produite avec la composition de revêtement présente après le durcissement une épaisseur de feuil sec de 5 à 75 µm.

9. Procédé selon l'une quelconque des revendications 1 à 8, **caractérisé en ce que** la composition de revêtement est utilisée pour la production de la couche d'apprêt de garnissage d'un ensemble de couches OEM.

10. Procédé selon la revendication 9, **caractérisé en ce que** lors de la production de l'ensemble de couches OEM la couche d'apprêt de garnissage est durcie complètement, dans des étapes ultérieures une couche de peinture de fond est appliquée et après une évaporation intermédiaire une couche finale de vernis est appliquée et enfin la couche de peinture de fond et la couche de vernis sont durcies ensemble.

11. Procédé selon la revendication 9, **caractérisé en ce que** lors de la production de l'ensemble de couches OEM la couche d'apprêt de garnissage est appliquée et évaporée, dans des étapes ultérieures une couche de peinture de fond est appliquée et après une évaporation intermédiaire une couche finale de vernis est appliquée et enfin la couche d'apprêt de garnissage, la couche de peinture de fond et la couche de vernis sont durcies ensemble.
